# FASCICULE DE BREVET EUROPEEN

(11) **EP 2 236 265 B1**
(45) Date de publication et mention de la délivrance du brevet: **14.08.2013**
(21) Numéro de dépôt: 10305305.4
(22) Date de dépôt: 25.03.2010
(51) Int. Cl.: B29C 45/14, B21D 39/03, B62D 25/08

(54) **Procédé de moulage d'une pièce hybride comprenant au moins deux inserts et installation pour la mise en oeuvre de ce procédé**
Verfahren zum Formen eines Hybridbauteils mit zumindest zwei Einsätzen sowie Vorrichtung zur Durchführung dieses Verfahrens
Method for moulding an hybrid part comprising at least two inserts and apparatus for carrying out such method

(30) Priorité: 02.04.2009 FR 0952139
(43) Date de publication de la demande: 06.10.2010
(73) Titulaire: Faurecia Bloc Avant, 92000 Nanterre (FR)
(72) Inventeur: Bierjon, Didier, 25400 Audincourt (FR); Clapie, Yann, 85134 Stammham (DE)
(74) Mandataire: Jacobson, Claude

(56) Documents cités:
- EP-A- 1 112 830
- WO-A-2005/110703
- DE-A1- 10 104 035
- DE-A1- 10 314 544
- JP-A- 4 182 108
- JP-A- 61 123 430

## Description

L'invention a trait à un procédé de moulage d'une pièce hydride qui comprend au moins deux inserts, éventuellement métalliques.

Dans le domaine du moulage par injection de matière plastique, notamment pour réaliser des éléments de supportage pour un véhicule automobile, il est connu d'utiliser des inserts métalliques pour rigidifier la pièce fabriquée. De tels inserts doivent être immobilisés l'un par rapport à l'autre. Pour ce faire, on peut assembler ces inserts l'un avec l'autre, par exemple par rivetage ou soudage, avant de les installer dans le moule d'injection. Les deux inserts ainsi assemblés s'avèrent encombrants et relativement difficiles à manipuler en vue de leur mise en place dans l'empreinte du moule. En outre, l'assemblage entre ces inserts doit être réalisé avec des tolérances faibles dans la mesure où leur position relative ne peut plus être adaptée lorsqu'ils sont mis en place dans le moule.

Il est également connu de « riveter » ensemble deux inserts en faisant passer de la matière plastique à travers deux orifices alignés, ménagés respectivement dans les deux inserts. L'assemblage entre les deux inserts résulte de la solidification de la matière plastique qui ne présente pas une résistance mécanique importante, au point que les inserts risquent d'être désolidarisés l'un de l'autre. Une pièce ainsi réalisée est donc peu solide.

Il est connu de DE-A-101 04 35 de serrer ensemble deux pièces métalliques au sein d'un moule dans lequel est ensuite injectée une masse de matière plastique. La position des pièces métalliques au sein du moule peut varier, notamment sous l'effet de la pression d'injection de la matière plastique, ce qui induit un risque de mauvais positionnement de ces pièces dans la pièce composite.

C'est à ces inconvénients qu'entend plus particulièrement remédier l'invention en proposant un nouveau procédé de moulage qui permet d'obtenir une solidarisation efficace de deux inserts appartenant à une pièce hybride, sans pour autant gêner leur mise en place dans le moule.

A cet effet, l'invention concerne un procédé de moulage, par injection de matière synthétique, d'une pièce hybride comprenant au moins deux inserts, au moyen d'un moule formé d'une matrice et d'un poinçon qui définissent entre eux une cavité de moulage en configuration fermée du moule. Ce procédé comprend des étapes consistant à :
a) placer un premier insert équipé d'au moins un pion, dans une empreinte définissant, en partie au moins, la cavité et dans une position où la pièce coopère avec un relief prévu sur le fond de l'empreinte et immobilise le premier insert par rapport à la matrice, selon des directions parallèles au fond et où une partie du pion dépasse du volume de l'empreinte destiné à définir la cavité ;
b) placer un deuxième insert dans l'empreinte, en engageant le pion dans une ouverture ménagée dans le deuxième insert ;
c) fermer le moule en déformant plastiquement la partie du pion qui dépasse du volume de l'empreinte à la fin de l'étape a), jusqu'à amener la matrice et le poinçon du moule dans la configuration fermée du moule ;
d) injecter un matériau thermoplastique dans la cavité du moule ;
e) ouvrir le moule ;
f) extraire la pièce moulée.

Grâce à l'invention, on garantit le bon positionnement du premier insert dans le moule grâce à sa coopération avec le relief prévu sur le fond de l'empreinte. On garantit également le bon positionnement du deuxième insert dans le moule grâce à sa coopération avec le doigt du premier insert. En outre, on se sert de la cinématique de fermeture du moule, à savoir par exemple le mouvement d'approche du poinçon ou d'une partie du poinçon par rapport à la matrice, pour réaliser un rivetage des deux inserts l'un par rapport à l'autre, au moyen d'une déformation plastique de la partie du pion qui, avant fermeture du moule, est correctement positionné par rapport à la matrice et dépasse du volume de l'empreinte dans laquelle sont installés les deux inserts.

Selon des aspects avantageux mais non obligatoires de l'invention, un tel procédé incorpore une ou plusieurs des caractéristiques suivantes, prises dans toute combinaison techniquement admissible :
- Lors de l'étape c), on déforme le pion de telle sorte qu'une portion de ce pion présente une largeur, prise perpendiculairement à la direction de mouvement relatif du poinçon et de la matrice, supérieure à la largeur maximum de l'ouverture mesurée perpendiculairement à la direction précitée.
- Au terme de l'étape a), un axe longitudinal central du pion s'étend perpendiculairement au fond de l'empreinte,
- Lors de l'étape a), on utilise un premier insert ayant au moins un voile plan et on pose ce voile à plat sur le fond de l'empreinte. Dans ce cas, lors de l'étape b), on utilise un deuxième insert ayant au moins un voile plan et on pose ce voile à plat sur le voile plan du premier insert.
- Le pion est cylindrique, à génératrice rectiligne et à section transversale circulaire, arrondie ou polygonale. Dans ce cas, le bord de l'ouverture du deuxième insert a avantageusement une géométrie complémentaire, au jeu près, de la section transversale extérieure du pion.

L'invention concerne également une installation de moulage qui permet de mettre en oeuvre un procédé tel que mentionné ci-dessus. Cette installation comprend un moule formé d'une matrice et d'un poinçon qui définissent entre eux une cavité de moulage en configuration fermée du moule. Le fond d'une empreinte, définissant en partie au moins la cavité du moule, est équipé d'un relief d'immobilisation du premier insert formé par une partie en saillie qui est apte à pénétrer dans le volume interne du pion et à s'y bloquer par coopération de formes. Le moule est apte à déformer plastiquement une partie du pion qui dépasse de l'empreinte à la fin de l'étape a) du procédé mentionné ci-dessus, lors de sa fermeture.

Avantageusement, le diamètre interne du pion est légèrement supérieur au diamètre externe de la partie en saillie.

On peut, en outre, prévoir que l'empreinte est formée dans une première partie du moule et que la deuxième partie du moule est pourvue d'un relief en saillie de déformation préférentielle de la partie du pion qui dépasse du volume de l'empreinte à la fin de l'étape a).

L'invention sera mieux comprise et d'autres avantages de celle-ci apparaitront plus clairement à la lumière de la description qui va suivre de procédés conformes à son principe, donnée uniquement à titre d'exemple et faite en référence aux dessins dans lesquels :
- la figure 1 est une représentation schématique de principe d'une installation de moulage au cours d'une première étape d'un procédé conforme à l'invention ;
- la figure 2 est une vue analogue à la figure 1 lors d'une deuxième étape du procédé ;
- la figure 3 est une vue partielle dans le sens de la flèche III à la figure 2 ;
- la figure 4 est une vue analogue à la figure 1 lors d'une troisième étape du procédé ;
- la figure 5 est une vue analogue à la figure 1 lors d'une quatrième étape du procédé ;
- la figure 6 est une vue analogue à la figure 3 pour une première variante de l'invention ;
- la figure 7 est une vue analogue à la figure 3 pour une deuxième variante de l'invention ; et
- la figure 8 est une vue analogue à la figure 4 pour une troisième variante de l'invention.

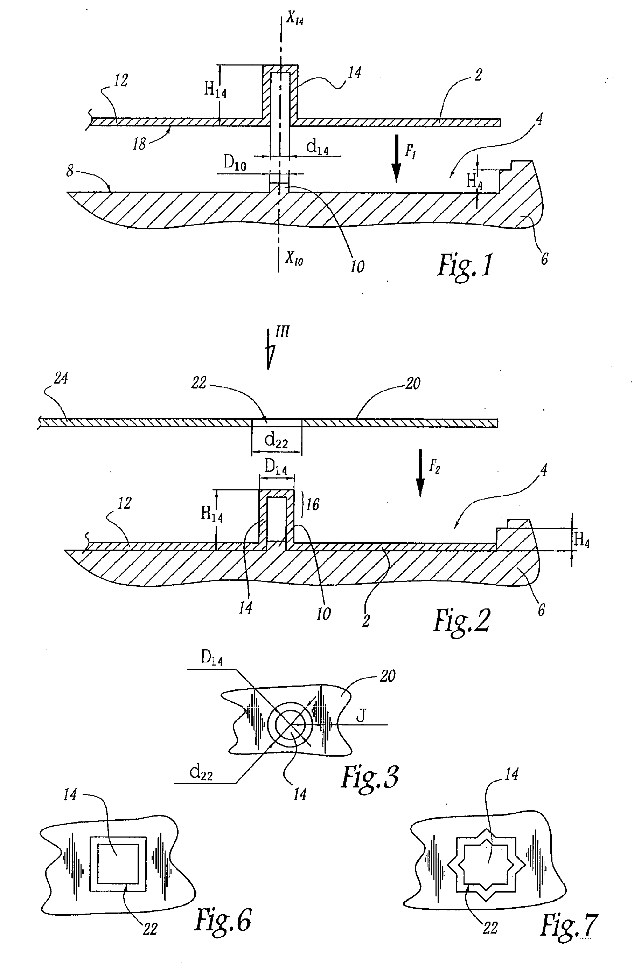

La figure 1 représente une première étape d'un procédé conforme à l'invention au cours de laquelle un insert métallique 2 est disposé dans une empreinte 4 formée par une matrice 6 appartenant à un moule de fabrication d'une pièce hybride, par injection de matière plastique.

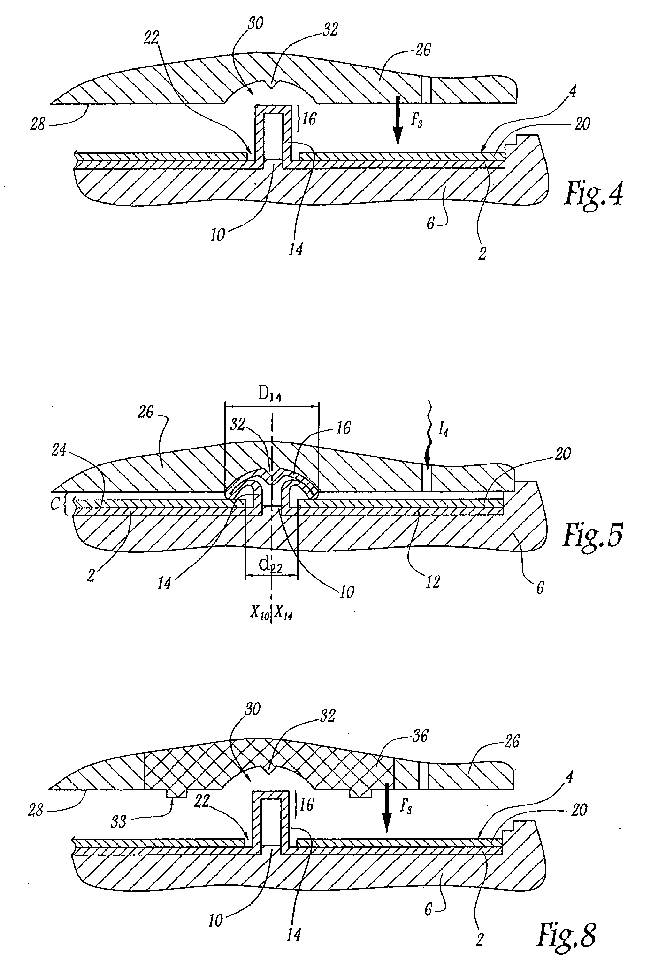

L'empreinte 4 est partiellement représentée sur la figure 1 et elle définit une cavité du moule, en coopération avec le poinçon du moule, lorsque le moule est en configuration fermée. Cette cavité de moulage est représentée à la figure 5, avec la référence C.

Le fond 8 de l'empreinte 4 est plan sur l'essentiel de sa surface et présente un ergot 10 de forme cylindrique à section circulaire centrée sur un axe X₁₀ perpendiculaire au fond 8.

L'insert 2 comprend un voile 12 qui est plan et destiné à reposer contre le fond 8. L'insert 2 comprend également un pion 14 réalisé par déformation localisée du flan de métal constituant l'insert 2 et qui présente une forme cylindrique centrée sur un axe X₁₄ perpendiculaire au voile 12. Le pion 14 est à section circulaire avec un diamètre interne d₁₄ légèrement supérieur au diamètre externe D₁₀ de l'ergot 10.

Il est ainsi possible de mettre en place l'insert 2 dans l'empreinte 4 en alignant les axes X₁₀ et X₁₄, puis en posant le voile 12 sur le fond 8 tout en coiffant l'ergot 10 avec le pion 14, ce que représente la flèche F₁ à la figure 2. On atteint alors la configuration de l'insert 2 représenté à la figure 2 où l'ergot 10 se bloque à l'intérieur du pion 14 par coopération de formes. L'insert 2 est ainsi immobilisé en translation par rapport à la matrice 6, selon des directions parallèles au fond 8. Dans cette configuration, les axes X₁₀ et X₁₄ sont confondus et perpendiculaires au fond 8.

Dans cette configuration, le pion 14 dépasse de l'empreinte 4. Plus précisément, on note H₄ la hauteur de l'empreinte 4 prise perpendiculairement au fond 8. On note H₁₄ la hauteur du pion 14 prise à partir de la face 18 de l'insert 2 destinée à reposer contre le fond 8.

La hauteur H₁₄ est supérieure à la hauteur H₄ de sorte qu'une partie 16 du pion 14 dépasse de l'empreinte 4 lorsque l'insert 2 est en place dans l'empreinte 4, comme représenté à la figure 2.

Un second insert métallique 20 peut alors être mise en place dans l'empreinte 4, comme représenté par la flèche F₂ à la figure 2. Cet insert métallique 20 est globalement plan et pourvu d'une ouverture 22 circulaire dont on note d₂₂ le diamètre.

Ce diamètre d₂₂ est légèrement supérieur au diamètre extérieur D₁₄ du pion 14, ce qui permet de mettre en place l'insert 20 dans l'empreinte 4 en engageant le pion 14 dans l'ouverture 22.

La différence entre les diamètres D₁₄ et d₂₂ permet de définir un jeu radial fonctionnel J pour l'introduction du pion 14 dans l'ouverture 22. Lorsque le deuxième insert 20 est posé sur le premier insert 2, le voile plan 24 du deuxième insert 20 vient en appui sur le voile plan 12 du premier insert 2, comme représenté à la figure 4. On peut alors refermer le moule en approchant le poinçon 26 de la matrice 6, comme représenté par la flèche F₃ à la figure 4.

En variante, la zone d'immobilisation en translation de l'insert 2 par rapport à la matrice 6 peut être délocalisée de la zone de rivetage et réalisée à proximité, par un pion de centrage prévu sur la matrice 6, ce pion pouvant alors être commun à plusieurs zones de rivetage. La dispersion possible résultant de la distance entre le centrage des inserts et les zones de rivetage est alors compensée par le jeu présent entre le pion 14 et l'ouverture 22, c'est-à-dire la différence des diamètres d₂₂ et D₁₄.

La surface 28 du poinçon 26 qui est destinée à délimiter la cavité C est pourvue d'un creux 30 dans lequel fait saillie une dent 32, en direction de la matrice 6 lorsque les parties constitutives du moule sont dans la configuration de la figure 4.

Le mouvement d'approche du poinçon 26 vers la matrice 6 a pour effet d'amener la dent 32 au contact de la partie 16 du pion 14 qui dépasse de l'empreinte 4, ce qui conduit à déformer le pion 14 pour atteindre une configuration analogue ou voisine de celle représentée à la figure 5, c'est-à-dire où le pion 14 est déformé plastiquement et vient en recouvrement partiel du voile 24 de l'insert 20, de telle sorte que les inserts métalliques 2 et 20 peuvent être considérés comme rivetés ensemble. En d'autres termes, on utilise le mouvement d'approche du poinçon 26 pour riveter ensemble les inserts 2 et 20 dans l'empreinte de la matrice, après que ces inserts ont été mis en place successivement dans cette empreinte.

Dans la configuration de la figure 5 où le pion 14 est déformé plastiquement, son diamètre extérieur D₁₄ a été augmenté, du fait de cette déformation, au point qu'il est supérieur au diamètre d₂₂ de l'ouverture 22, ce qui assure la retenue de l'insert 20 sur l'insert 2. Même si la déformation plastique du pion 14 n'est pas régulière autour de l'axe X₁₄, la largeur de ce pion, prise perpendiculairement à la direction du mouvement d'approche F₃ du poinçon et de la matrice, est supérieure au diamètre de l'ouverture 22.

Il est alors possible d'injecter dans la cavité C un matériau thermoplastique, chargé ou non en fibres de renfort, par exemple un polyamide ou un polypropylène, à travers un ou plusieurs canaux tel que le canal 34 représenté dans le poinçon 26, ce que représente la flèche I₄ à la figure 5. Le nombre et la répartition des canaux, 34 et équivalents, d'injection du matériau plastique sont adaptés à la géométrie de la pièce à constituer.

Une fois le matériau thermoplastique solidifié, le moule est ouvert et la pièce moulée est extraite de l'empreinte 4.

Grâce à l'invention, on peut donc constituer une pièce hybride comprenant à la fois deux inserts métalliques 2 et 20 et une quantité de matière plastique adaptée, dans laquelle les inserts sont fermement assemblés l'un à l'autre, alors même qu'ils peuvent être fabriqués avec des tolérances de fabrication relativement élevées puisqu'ils sont introduits successivement dans l'empreinte du moule.

Le pion 14 n'est pas nécessairement pourvu d'un voile d'extrémité parallèle au voile 12. En d'autres termes, le pion 14 peut être débouchant à l'opposé de l'ergot 10.

Comme représenté aux figures 6 et 7, le pion 14 n'est pas forcément à section circulaire. Il peut avoir une section carrée, comme représentée à la figure 6, ou polygonale, comme représentée à la figure 7, la géométrie de l'ouverture 22 étant alors adaptée pour conserver un jeu fonctionnel. Selon une variante non représentée de l'invention, le pion 14 peut être à section arrondie, mais non circulaire.

Comme représenté à la figure 8, une zone 33 d'appui périphérique sur l'insert 20 autour du pion 14 peut être ménagée sur la surface 28 du poinçon 26 qui définit la cavité de moulage. Cette zone d'appui périphérique 33 permet d'assurer le contact entre les inserts 2 et 20 lors de l'opération de rivetage résultant de la déformation plastique de la partie 16 du pion 14 qui dépasse de la cavité C. La zone 33 entoure le creux 30 et la dent 32.

Le creux 30, la dent 32 et la zone 33 sont ménagées sur une partie 36 du poinçon 26 qui est mobile par rapport à la partie principale de ce poinçon et qui est actionnée par un organe indépendant, tel qu'un vérin, ce qui permet de différencier la force de fermeture du moule de la force utilisée pour le rivetage par déformation plastique de la partie 16. Ceci n'est toutefois pas obligatoire et la zone 33 peut être prévue sur un poinçon 26 monobloc, tel que celui du premier mode de réalisation.

En outre, on peut prévoir dans le premier mode de réalisation et indépendamment de l'utilisation d'une zone d'appui telle que la zone 33, une partie du poinçon mobile pour exercer l'effort de rivetage, indépendamment de l'effort de fermeture du moule.

L'invention a été représentée dans le cas où les inserts 2 et 20 sont métalliques. L'un de ces inserts, ou les deux, peut être réalisé dans un matériau autre que du métal. En particulier, l'insert 20 peut ne pas être métallique, l'insert 2 restant métallique pour assurer un rivetage efficace. Dans ce cas, l'insert 20 peut être réalisé en matériau plastique, thermoplastique ou thermo dur, chargé ou non, ou encore dans un matériau de type céramique.

## Revendications

1. Procédé de moulage, par injection de matière synthétique, d'une pièce hybride comprenant au moins deux inserts (2, 20), au moyen d'un moule formé d'une matrice (6) et d'un pinçon (26) qui définissent,entre eux une cavité (C) de moulage en configuration fermée du moule, qui comprend des étapes consistant à :
a) placer (F₁) un premier insert (2) équipé d'au moins un pion (14), dans une empreinte (4) définissant en partie au moins la cavité (C) et dans une position où une partie (16) du pion dépasse du volume de l'empreinte destiné à définir la cavité ;
b) placer (F₂) un deuxième insert (20) dans l'empreinte en engageant le pion dans une ouverture (22) ménagée dans le deuxième insert ;
c) fermer le moule (F₃) en déformant plastiquement la partie (16) du pion qui dépasse du volume de l'empreinte à la fin de l'étape a), jusqu'à amener la matrice (6) et le poinçon (26) du moule dans la configuration fermée du moule ;
d) injecter (I₄) un matériau thermoplastique dans la cavité du moule ;
e) ouvrir le moule ;
f) extraire la pièce moulée,
**caractérisé en ce que** le premier insert est placé dans l'empreinte dans une position où le pion coopère avec un relief (10) prévu sur le fond (8) de l'empreinte et immobilise le premier insert (2) par rapport à la matrice (6), selon des directions parallèles au fond.

2. Procédé selon la revendication 1, **caractérisé en ce que** lors de l'étape c), on déforme le pion (14) de telle sorte qu'une portion (16) de ce pion présente une largeur (D₁₄), prise perpendiculairement à la direction de mouvement relatif (F₃) du poinçon (26) et de la matrice (6), supérieure à la largeur maximum (d₂₂) de l'ouverture (22) mesurée perpendiculairement à la direction précitée.

3. Procédé selon l'une des revendications précédentes, **caractérisé en ce qu'**au terme de l'étape a), un axe longitudinal central (X₁₄) du pion (14) s'étend perpendiculairement au fond de l'empreinte.

4. Procédé selon l'une des revendications précédentes, **caractérisé en ce que** lors de l'étape a), on utilise un premier insert (2) ayant au moins un voile plan (12) et on pose ce voile à plat sur un fond (8) de l'empreinte.

5. Procédé selon la revendication 4, **caractérisé en ce que** lors de l'étape b), on utilise un deuxième insert (20) ayant au moins un voile plan (24) et on pose ce voile à plat sur le voile plan (12) du premier insert (2).

6. Procédé selon l'une des revendications précédentes, **caractérisé en ce que** le pion (14) est cylindrique, à génératrice rectiligne et à section transversale circulaire, arrondie ou polygonale.

7. Procédé selon la revendication 6, **caractérisé en ce que** le bord de l'ouverture (22) du deuxième insert (20) a une géométrie complémentaire, au jeu (J) près, de la section transversale extérieure du pion (14).

8. Installation de moulage pour la mise en oeuvre d'un procédé selon l'une des revendications précédentes, cette installation comprenant un moule d'injection forme d'une matrice (6) et d'un poinçon (26) qui définissent entre eux une cavité (C) de moulage par injection en configuration fermée du moule, **caractérisée en ce que** le fond (8) d'une empreinte (4), définissant en partie au moins la cavité (C) du moule, est équipé d'un relief (10) d'immobilisation du premier insert (2) formé par une partie en saillie (10) apte à pénétrer dans le volume interne du pion (14) et à s'y bloquer par coopération de formes et **en ce que** le moule est apte à déformer plastiquement une partie (16) du pion, qui dépasse de l'empreinte à la fin de l'étape a), lors de sa fermeture (F3).

9. Installation selon la revendication 8, **caractérisé en ce que** le diamètre interne (d₁₄) du pion (14) est légèrement supérieur au diamètre externe (D₁₀) de la partie en saillie (10).

10. Installation selon l'une des revendications 8 ou 9, **caractérisée en ce que** l'empreinte (4) est formée dans une première partie (6) du moule et la deuxième partie (26) du moule est pourvue d'un relief en saillie (32) de déformation préférentielle de la partie (16) du pion qui dépasse du volume de l'empreinte à la fin de l'étape a).

## Patentansprüche

1. Verfahren zum Formen, durch Einspritzen eines Kunststoffmaterials, eines Hybridteils mit wenigstens zwei Einsätzen (2, 20) mittels einer Form, die von einer Matrize (6) und einem Stempel (26) gebildet ist, die zwischen einander eine Formungskavität (C) bei geschlossener Konfiguration der Form definieren, welches Schritte aufweist, die bestehen aus:
a) Platzieren (F₁) eines ersten Einsatzes (2), der mit wenigstens einem Vorsprung (14) ausgestattet ist, in einer Vertiefung (4), die wenigstens teilweise die Kavität (C) definiert, und in einer Position, bei welcher ein Teil (16) des Vorsprungs über das Volumen der Vertiefung hervorsteht, welches bestimmt ist, um die Kavität zu definieren,
b) Platzieren (F₂) eines zweiten Einsatzes (20) in der Vertiefung unter Eingreifen des Vorsprungs in eine Öffnung (22), die in dem zweiten Einsatz ausgebildet ist,
c) Schließen der Form (F₃) unter plastischem Deformieren des Teils (16) des Vorsprungs, der am Ende des Schritts a) über das Volumen der Vertiefung hervorsteht, bis die Matrize (6) und der Stempel (26) der Form in die geschlossene Konfiguration der Form gebracht sind,
d) Einspritzen (l₁) eines thermoplastischen Materials in die Kavität der Form,
e) Öffnen der Form,
f) Entnehmen des geformten Teils,
**dadurch gekennzeichnet, dass** der erste Einsatz in der Vertiefung platziert wird in einer Position, bei welcher der Vorsprung mit einem am Boden (8) der Vertiefung vorgesehenen Relief (10) zusammenwirkt und den ersten Einsatz (2) bezüglich der Matrize (6) in die Richtungen parallel zum Boden fixiert.

2. Verfahren gemäß Anspruch 1, **dadurch gekennzeichnet, dass** während des Schritts (c) man den Vorsprung (14) derart deformiert, dass ein Abschnitt (16) dieses Vorsprungs eine Breite (D14) hat, genommen senkrecht zur relativen Bewegungsrichtung (F₃) des Stempels (26) und der Matrize (6), die größer als die maximale Breite (d₂₂) der Öffnung (22) ist, die senkrecht zu der vorgenannten Richtung gemessen ist.

3. Verfahren gemäß einem der vorhergehenden Ansprüche, **dadurch gekennzeichnet, dass** am Ende von Schritt a) sich eine zentrale Längsachse (X₁₄) des Vorsprungs (14) senkrecht zum Boden der Vertiefung erstreckt.

4. Verfahren gemäß einem der vorhergehenden Ansprüche, **dadurch gekennzeichnet, dass** während des Schritts a) man einen ersten Einsatz (2) verwendet, der wenigstens einen ebenen Umlaufkragen (12) hat und man diesen Umlaufkragen flach auf einen Boden (8) der Vertiefung auflegt.

5. Verfahren gemäß Anspruch 4, **dadurch gekennzeichnet, dass** während des Schritt b) man einen zweiten Einsatz (20) verwendet, der wenigstens einen ebenen Umlaufkragen (24) hat und man diesen Umlaufkragen flach auf den ebenen Umlaufkragen (12) des ersten Einsatzes (2) auflegt.

6. Verfahren gemäß einem der vorhergehenden Ansprüche, **dadurch gekennzeichnet, dass** der Vorsprung (14) zylindrisch ist, mit Geradlinigkeit und mit einem kreisförmigen, rundlichen oder polygonalen Querschnitt.

7. Verfahren gemäß Anspruch 6, **dadurch gekennzeichnet, dass** der Rand der Öffnung (22) des zweiten Einsatzes (20) eine Geometrie hat, die, mit knappem Spiel (J), komplementär ist zu dem Außenquerschnitt des Vorsprungs (14).

8. Formungseinrichtung zum Durchführen eines Verfahrens gemäß einem der vorhergehenden Ansprüche, wobei diese Einrichtung aufweist eine Einspritzform, die von einer Matrize (6) und einem Stempel (26) gebildet ist, die zwischen einander eine Spritzformungskavität (C) bei geschlossener Konfiguration der Form bilden, **dadurch gekennzeichnet, dass** der Boden (8) einer Vertiefung (4), die zumindest teilweise die Kavität (C) der Form definiert, mit einem Relief (10) versehen ist zum Fixieren des ersten Einsatzes (2), das von einem Vorsprungsteil (10) gebildet ist, das in der Lage ist, in das interne Volumen des Vorsprungs (14) einzudringen und darin im Formschluss arretiert zu sein, und dass die Form in der Lage ist, bei ihrem Schließen (F₃) einen Teil (16) des Vorsprungs plastisch zu verformen, welcher am Ende von Schritt a) über die Vertiefung hervorsteht.

9. Einrichtung gemäß Anspruch 8, **dadurch gekennzeichnet, dass** der Innendurchmesser (d₁₄) des Vorsprungs (14) geringfügig größer als der Außendurchmesser (D₁₀) des Vorsprungsteils (10) ist.

10. Einrichtung gemäß einem der Ansprüche 8 oder 9, **dadurch gekennzeichnet, dass** die Vertiefung (4) in einem ersten Teil (6) der Form ausgebildet ist und der zweite Teil (26) der Form mit einem Vorsprungs-Relief (32) versehen ist zur präferenziellen Deformation des Teils (16) des Vorsprungs, der am Ende von Schritt a) über das Volumen der Vertiefung hervorsteht.

## Claims

1. Method for moulding, by the injection of synthetic material, a hybrid part comprising at least two inserts (2, 20), by means of a mould formed from a die (6) and a punch (26) that define between them a moulding cavity (C) in the closed configuration of the mould, which comprises steps consisting of:
a) placing (F₁) a first insert (2) equipped with at least one stud (14), in an impression (4) at least partly defining the cavity (C) and in a position where a part (16) of the stud projects beyond the space of the impression intended to define the cavity;
b) placing (F₂) a second insert (20) in the impression by engaging the stud in an opening (22) formed in the second insert;
c) closing the mould (F₃) by plastically deforming the part (16) of the stud that projects beyond the space of the impression at the end of step a), until the die (6) and the punch (26) of the mould are brought into the closed configuration of the mould;
d) injecting (I₄) a thermal plastic material into the cavity of the mould;
e) opening the mould;
f) extracting the moulded part,
**characterised in that** the first insert is placed in the impression in a position where the stud cooperates with a relief (10) provided on the bottom (8) of the impression and immobilises the first insert (2) with respect to the die (6), in directions parallel to the bottom.

2. Method according to claim 1, **characterised in that**, during step c), the stud (14) is deformed so that a portion (16) of this stud has a width (D₁₄), taken perpendicular to the direction of relative movement (F₃) of the punch (26) and the matrix (6), greater than the maximum width (d₂₂) of the opening (22) measured perpendicular to the aforementioned direction.

3. Method according to one of the preceding claims, **characterised in that**, at the end of step a), a central longitudinal axis (X₁₄) of the stud (14) extends perpendicular to the bottom of the impression.

4. Method according to one of the preceding claims, **characterised in that**, during step a), a first insert (2) having at least one plane web (12) is used and this web is placed flat on a bottom (8) of the impression.

5. Method according to claim 4, **characterised in that**, during step b), a second insert (20) having at least one plane web (24) is used and this web is placed flat on the plane web (12) of the first insert (2).

6. Method according to one of the preceding claims, **characterised in that** the stud (14) is cylindrical, with a rectilinear generatrix and a circular, rounded or polygonal transverse section.

7. Method according to claim 6, **characterised in that** the edge of the opening (22) in the second insert (20) has a geometry that is complementary, to within any clearance (J), to the external transverse section of the stud (14).

8. Moulding equipment for implementing a method according to one of the preceding claims, this equipment comprising an injection mould formed by a die (6) and a punch (26) that define between them an injection moulding cavity (C) in the closed configuration of the mould, **characterised in that** the bottom (8) of an impression (4), at least partly defining the cavity (C) of the mould, is equipped with a relief (10) for immobilising the first insert (2) formed by a projecting part (10) able to enter the internal space of the stud (14) and to lock itself therein by cooperation of shapes and **in that** the mould is able to plastically deform a part (16) of the stud, which projects beyond the impression at the end of step a), when it is closed (F3).

9. Equipment according to claim 8, **characterised in that** the inside diameter (d₁₄) of the stud (14) is slightly greater than the outside diameter (D₁₀) of the projecting part (10).

10. Equipment according to one of claims 8 or 9, **characterised in that** the impression (4) is formed in a first part (6) of the mould and the second part (26) of the mould is provided with a projecting relief (32) for preferential deformation of the part (16) of the stud that projects beyond the space of the impression at the end of step a).
